(19) Europäisches Patentamt / European Patent Office / Office européen des brevets

(11) EP 3 738 990 A1

(12) EUROPÄISCHE PATENTANMELDUNG

(43) Veröffentlichungstag:
**18.11.2020 Patentblatt 2020/47**

(21) Anmeldenummer: **19174539.7**

(22) Anmeldetag: **15.05.2019**

(51) Int Cl.:
***C08G 18/18*** (2006.01) ***C08G 18/20*** (2006.01)
***C08G 18/24*** (2006.01) ***C08G 18/32*** (2006.01)
***C08G 18/48*** (2006.01) ***C08G 18/63*** (2006.01)
***C08G 18/76*** (2006.01) ***C08G 18/50*** (2006.01)
*C08G 101/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **POLYURETHANSCHAUMSTOFFE MIT ERNIEDRIGTEM COLD-FLOW-EFFEKT UND VERFAHREN ZU DEREN HERSTELLUNG**

(57) Die Erfindung betrifft ein Verfahren zur Herstellung von Polyurethan-Weichschaum, wobei der Polyurethan-Weichschaum erhalten wird oder erhältlich ist durch Umsetzung einer Zusammensetzung enthaltend oder bestehend aus

- einer Komponente **A1** enthaltend oder bestehend aus mindestens einem gefüllten Polyol,
- einer Komponente **A2** enthaltend oder bestehend aus Verbindungen die gegenüber Isocyanaten reaktiv sind mit einer OH-Zahl gemäß DIN 53240-1, Verfahren ohne Katalysator, Juni 2013, von $\geq$ 20 bis < 100 mg KOH/g, und wobei die Komponente A2 kein gefülltes Polyol enthält
- einer Komponente **A3** enthaltend Wasser und/oder mindestens ein physikalisches Treibmittel,
- einer Komponente **A4** enthaltend Hilfs- und Zusatzstoffe, und
- einer Komponente **B** enthaltend oder bestehend aus Di- und/oder Polyisocyanaten,

wobei die Herstellung bei einer Kennzahl von 90 bis 140 erfolgt,
**dadurch gekennzeichnet, dass**
die Umsetzung unter Anwesenheit von
- 0,5 bis 3 Gew.-Teilen, bezogen auf die Summe der Komponenten A1 und A2, eines organischen Harnstoffderivats als Komponente **C** erfolgt, das erhältlich ist oder erhalten ist durch Umsetzung von Harnstoff mit einem difunktionellen Amin, wobei das Amin ein zahlengemitteltes Molekulargewicht ermittelt nach DIN 55672-1 (März 2016), Teil 1, mit Gelpermeationschromatographie unter Verwendung von Polystyrolstandards und Tetrahydrofuran als Elutionsmittel von 200 bis 1000 g/mol aufweist.

Des Weiteren betrifft die Erfindung einen Polyurethan-Weichschaum, insbesondere hochelastischen HR-Polyurethanweichschaum, erhältlich nach dem erfindungsgemäßen Verfahren, sowie die Verwendung dieses Polyurethan-Weichschaums zur Herstellung von Möbelpolsterungen, Textileinlagen, Matratzen, Automobilsitzen, Kopfstützen, Armlehnen, Sitzauflagen und Bauelementen.

EP 3 738 990 A1

## Beschreibung

Die vorliegende Erfindung betrifft ein Verfahren zur Herstellung von Polyurethan-Weichschäumen, insbesondere von HR-Polyurethanschäumen (Kaltschaum), wobei der Polyurethan-Weichschaum erhalten wird oder erhältlich ist durch Umsetzung einer Zusammensetzung die ein Additiv aus einer Harnstoffverbindung enthält, welches den Cold-Flow-Effekt, also die Deformation der erhaltenen Polyurethan-Weichschäume bei Lagerung, verringert. Weiter betrifft die Erfindung die aus dem Verfahren erhältlichen Polyurethane, sowie deren Verwendung.

Polyurethane können unter anderem als Hartschäume oder als Weichschäume hergestellt werden. Unter Polyurethan-Weichschaumstoffen werden Polyurethan-Schäume verstanden, die einer Druckbeanspruchung einen geringen Widerstand entgegensetzen, die offenzellig, luftdurchlässig und reversibel verformbar sind. Polyurethan-Weichschaumstoffe können unter anderem hergestellt werden, indem die Reaktionsmischung in einer Form polymerisiert wird, man spricht dann von Formschäumen. Dabei kann die Reaktionsmischung entweder mit oder ohne äußere Wärmezufuhr aushärten, abhängig von dem Verfahren spricht man von Kaltschaum oder Heißschaum. Der Kaltschaum wird auch als High-Resilient-Schaum, oder kurz HR-Schaumstoff, bezeichnet.

Hochelastische HR-Polyurethanschäume weisen einen gewissen Anteil unbeschädigter Zellmembranen auf. Gegenüber Polyurethan-Weichschaumstoffen weisen hochelastische HR-Schaumstoffe bei gleicher Rohdichte eine höhere Elastizität auf, was sich unter anderem in einer niedrigeren Stauchhärte äußert. Um hochelastische HR-Schaumstoffe herzustellen werden üblicherweise füllstoffhaltige Polyole und Toluylendiisocyanat sowie ein Vernetzer wie beispielsweise Alkanolamine oder höherfunktionelle Alkohole eingesetzt. Die Vernetzer werden benötigt, um über eine schnelle Reaktion mit TDI den Schaum in der Entstehungsphase zu stabilisieren (Günther, Oertel; Polyurethane; 3. Auflage; Kap. 5.1.1.6 und 5.1.2).

Hochelastische HR-Schaumstoffe sind in der Polyurethan-Weichschaum-Industrie von großer Bedeutung. Matratzenkerne und Polstermöbelzuschnitte werden zu einem großen Teil auf der Basis von HR-Schaumstoffen produziert. Es werden Schaumblöcke hergestellt, die dann nach Bedarf konfektioniert werden. Nach dem Schäumen der Blöcke werden diese zwecks Ausreaktion im Blocklager gelagert. Dabei kommt es häufig zu dem sogenanntem "Cold-Flow-Effekt" (Kaltfließverhalten). Unter dem Cold-Flow-Effekt oder Kaltfließverhalten wird im Allgemeinen die Ausbeulung, Deformation oder Dimensionsänderung eines Materials unter einem konstanten Gewicht bei Umgebungstemperatur verstanden.

Dabei ist das konstante Gewicht in diesem Fall das Eigengewicht des Schaumblockes. Die Schaumblöcke nehmen bedingt durch den Zug des Eigengewichts eine trapezförmige Blockgeometrie an. Dies stellt in der Schaumstoffweiterverarbeitung ein gravierendes Problem dar, da große Mengen Schnittabfälle bei der Schaumstoffkonfektionierung anfallen und dadurch die Ausbeute bei der Konfektionierung signifikant abnimmt.

Besonders vom Cold-Flow-Effekt betroffen sind HR-Schaumstoffe, die Toluylendiisocyanat (TDI) sowie Zinn-2-ethylhexanoat enthalten. Zinn-2-ethylhexanoat stellt den am gängigsten verwendete Katalysator (Vernetzungskatalysator) für die Herstellung von konventionellen HR-Schaumstoffen dar. Zwar sind auch andere Katalysatoren wie z.B. Dibutylzinndilaurat noch gelegentlich im Einsatz. Organozinnverbindungen wie Dibutylzinnlaurat werden jedoch ökologisch zunehmend kritischer bewertet und verschiedene Produktlabel schließen ihre Verwendung mittlerweile aus. Obgleich Dibutylzinndilaurat den Cold-Flow-Effekt reduziert, stellt Dibutylzinndilaurat somit keine Alternative zu Zinn-2-ethylhexanoat dar.

Ein herkömmliches Anti-Cold-Flow-Additiv für Zusammensetzungen für die Herstellung von Polyurethan-Schäumen im Markt, d.h. ein Additiv zur Verringerung von Deformationen von Polyurethan-Schaumblöcken während der Lagerung, ist beispielsweise der Crosslinker Ortegol 204 Kombination mit Kosmos 54 (ein Zinksalz beides von Evonik). Ein HR-Polyurethanschaum der keinen oder nur einen geringen Cold-Flow-Effekt aufweist kann mit diesem herkömmlichen Produkt jedoch nur erhalten werden, wenn die beiden Komponenten in einem bestimmten Mischungsverhältnis eingesetzt werden. Das Verarbeitungsfenster, d.h. die möglichen Dosierungen für einen HR-Polyurethanschaum in dem der erhaltene Schaum die gewünschten Eigenschaften aufweist, ist folglich für diese Technologie schmal. Sofern herkömmliche Produkte für die Herstellung von Polyurethan-Weichschaum, insbesondere HR-Weichschaumstoffe, eingesetzt werden, so ist die Fehlertoleranz bei der Dosierung gering und schon eine kleine Abweichung von dem richtigen Mischungsverhältnis führt zu nicht verwendbaren Polyurethan-Weichschäumen, die entsorgt werden müssen oder zu einer großen Abfallmenge, die dadurch entsteht, dass Teile des deformierten Blocks bei der Konfektionierung weggeschnitten werden müssen.

US 2014/0221518 A1 bezieht sich auf Polyurethan-Schäume, die Pyranosen oder Furanosen enthalten und bei denen der Cold-Flow-Effekt im Vergleich zu Polyurethan-Schäumen enthaltend eine Mischung aus einem geradkettigen Zuckeralkohol und Harnstoff und verringert ist.

US 2010/0069518 offenbart ein Verfahren zur Herstellung von Polyurethanschäumen, insbesondere von Polyurethanschäumen enthaltend gefüllte Polyole, bei dem kein Dibutylzinndilaurat verwendet wird. Es wird ein Verfahren offenbart bei dem ein Prepolymer aus 2-Aminoethanol, einem Polyol und Polyisocyanat in Gegenwart eines Metallsalzes einer organischen Säure, insbesondere dem Zinksalz der Ricinolsäure, als Katalysator hergestellt wird. Zur Verringerung

des Cold-Flow-Effekts wird ein handelsüblicher anti-Cold-Flow-Zusatz, nämlich Ortegol 204 von Evonik, zu der Mischung gegeben.

EP 0 303 105 bezieht sich auf die Katalyse der Herstellung von Polyurethanen. Es wird ein Katalysator offenbart, der durch Umsetzung von Harnstoff mit heterocyclischen Verbindungen, die zwei Amingruppen im Molekülring enthalten, oder mit Methoxypropylamin erhalten wird. Die Druckschrift bezieht sich nicht auf das Cold-Flow-Verhalten der Polyurethane.

Es besteht somit ein Bedarf an Polyurethan-Weichschäumen, insbesondere hochelastischen HR-Polyurethanschäumen, die nur einen geringen Cold-Flow-Effekt aufweisen, d.h. die sich vergleichsweise wenig oder nur kaum verformen, wenn sie gelagert werden. Des Weiteren besteht ein Bedarf an Anti-Cold-Flow-Additiven für die Herstellung von Polyurethan-Weichschäumen, insbesondere hochelastischen HR-Polyurethanschäumen, die in verschiedenen Dosierungen eingesetzt werden können ohne dass die Qualität des Polyurethanschaums beeinträchtigt wird. Die Anti-Cold-Flow-Additive müssen in der Zusammensetzung zur Herstellung der Polyurethane löslich sein. Darüber hinaus sollen die mechanischen Eigenschaften der Polyurethan-Weichschäume, insbesondere der hochelastischen HR-Polyurethanschäume, nicht durch das Additiv negativ beeinflusst werden. Insbesondere soll die Stauchhärte nur geringfügig von Polyurethanschäumen ohne ein Additiv abweichen.

Aufgabe dieser Erfindung war es, ein Verfahren für die Herstellung von Polyurethan-Weichschäumen, insbesondere hochelastischen HR-Polurethanschäumen, zu Verfügung zu stellen, bei dem durch Einsatz eines Additivs im Herstellungsverfahren der Cold-Flow-Effekt, also die Deformation bei Lagerung der Schäume, verringert wird. Dabei sollte insbesondere eine stärkere Verringerung des Cold-Flow-Effekts erreicht werden als mit herkömmlichen Anti-Cold-Flow-Additiven. Ferner war von Interesse, dass die mechanischen Eigenschaften der HR-Polyurethanschäume durch das Additiv nicht verschlechtert werden. Insbesondere soll die Stauchhärte im Vergleich zu Polyurethan-Schäumen ohne Additiv kaum verändert sein. Außerdem sollte der Dosierungsbereich oder das Verarbeitungsfenster, in dem das erfindungsgemäße Additiv eingesetzt werden kann, groß sein, wobei die erhaltenen Polyurethanschäume jeweils vergleichbare mechanische Eigenschaften und geringen Cold-Flow-Effekt, d.h. wenig Deformation bei Lagerung, aufweisen. Darüber hinaus soll das Anti-Cold-Flow-Additiv in der Zusammensetzung zur Herstellung der Polyurethane löslich sein.

Diese Aufgabe wurde gelöst durch ein Verfahren zur Herstellung von Polyurethan-Weichschaum, wobei der Polyurethan-Weichschaum erhalten wird oder erhältlich ist durch Umsetzung einer Zusammensetzung enthaltend oder bestehend aus

- einer Komponente **A1** enthaltend oder bestehend aus mindestens einem gefüllten Polyol,
- einer Komponente **A2** enthaltend oder bestehend aus Verbindungen die gegenüber Isocyanaten reaktiv sind mit einer OH-Zahl gemäß DIN 53240-1, Verfahren ohne Katalysator, Juni 2013, von $\geq$ 20 bis < 100 mg KOH/g, und wobei die Komponente A2 kein gefülltes Polyol enthält
- einer Komponente **A3** enthaltend Wasser und/oder mindestens ein physikalisches Treibmittel,
- einer Komponente **A4** enthaltend Hilfs- und Zusatzstoffe, und
- einer Komponente **B** enthaltend oder bestehend aus Di- und/oder Polyisocyanaten,

wobei die Herstellung bei einer Kennzahl von 90 bis 140 erfolgt,
**dadurch gekennzeichnet, dass**
die Umsetzung unter Anwesenheit von

- 0,5 bis 3,0 Gew.-Teilen, bezogen auf die Summe der Komponenten A1 und A2, eines organischen Harnstoffderivats als Komponente C erfolgt, das erhältlich ist oder erhalten ist durch Umsetzung von Harnstoff mit einem difunktionellen Amin, wobei das Amin ein zahlengemitteltes Molekulargewicht ermittelt nach DIN 55672-1 (März 2016), Teil 1, mit Gelpermeationschromatographie unter Verwendung von Polystyrolstandards und Tetrahydrofuran als Elutionsmittel von 200 bis 1000 g/mol aufweist, bevorzugt weist das Amin ein zahlengemitteltes Molekulargewicht von 200 bis 800 g/mol, bevorzugter von 200 bis 650 g/mol, besonders bevorzugt 400 bis 650 g/mol auf.

Es wurde überraschend gefunden, dass das erfindungsgemäße Harnstoffderivat das Cold-Flow-Verhalten von Polyurethanschäumen, insbesondere von Polyurethanschäumen enthaltend Toluylendiisocyanat (TDI) und Zinn-2-ethylhexanoat (Desmorapid SO), verbessert, d.h. die Schäume verlieren weniger Höhe im Vergleich zu ihrer anfänglichen Höhe als Schäume die bisher bekannte Anti-Cold-Flow-Additive enthalten.

Die Herstellung von Schaumstoffen auf Isocyanatbasis ist an sich bekannt und z.B. im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Komponente A1

Komponente A1 enhält oder besteht aus mindestens einem gefüllten Polyol, wobei der Füllstoff bevorzugt ein Reaktionsprodukt aus Di- und oder Polyisocyanaten mit gegenüber Isocyanaten reaktionsfähigen Wasserstoffatomen aufweisenden Verbindungen ist.

Füllstoffhaltige Polyole enthalten fein verteilte Feststoffpartikel in Form einer dispergierten Phase in einem Grundpolyol. Füllstoffhaltige Polyole werden herkömmlich durch Polymerisation von Styrol und Acrylnitril oder durch Umsetzung von Diisocyanat mit Diaminen beziehungsweise Aminoalkoholen in aktiven oder inaktiven Basis Polyolen hergestellt. Eine technisch bedeutende Gruppe von füllstoffhaltigen Polyethern sind die Polyharnstoff - beziehungsweise Polyhydrazodicarbonamid-Polyole. Sie werden durch Reaktionen weiterer Komponenten im Polyol in situ erzeugt. Als Reaktionskomponenten dienen die Isocyanate und Diamine beziehungsweise Hydrazin, die sich durch Polyaddition zu Polyharnstoffen beziehungsweise Polyhydrazodicarbonaminen verbinden. Hierbei findet zum Teil eine Verknüpfung mit den Hydroxylgruppen der Polyether-Kette statt. Die so erhaltenen stabilen Dispersionen werden als PHD-Polyether bezeichnet.

In einer bevorzugten Ausführungsform enthält oder besteht Komponente A1 aus

A1.1 füllstoffhaltigem Polyol mit einem Füllstoffaufbau aus Polyharnstoffdispersionen, die durch Umsetzung von Di- und/oder Polyisocyanaten mit primären und/oder sekundären Aminogruppen aufweisenden Di- und/oder Polyaminen und/oder Hydrazinen in einer Polyolkomponente erhältlich sind (PHD- Polyole),
und/oder
A1.2 füllstoffhaltigem Polyol, mit einem Füllstoffaufbau aus Urethangruppen enthaltenden Dispersionen, die durch Umsetzung von Alkanolaminen mit Di- und/oder Polyisocyanaten in einer Polyolkomponente erhältlich sind (PIPA-Polyole)
und/oder
A1.3 füllstoffhaltigem Polyol mit einem Füllstoffaufbau von durch radikalische Polymerisation geeigneter Monomere wie Styrol oder Acrylnitril in einem Basispolyol erzeugten festen Polymeren enthalten (SAN-Polyole).

In einer weiteren bevorzugten Ausführungsform enthält die Komponente A1 kein Styrol-Acrylnitril-gefülltes Polyol enthält. In einer anderen bevorzugten Ausführungsform enthält oder besteht Komponente A1 aus PHD-Polyol. Vorzugsweise wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol, hergestellt durch Alkoxylierung eines trifunktionellen Starters (wie beispielsweise Glycerin und/oder Trimethylolpropan).

Bei den PIPA-Polyolen handelt es sich um durch Polyisocyanat-Polyaddition mit Alkanolaminenmodifizierte Polyetherpolyole, wobei das Polyetherpolyol bevorzugt eine Funktionalität von 2,5 bis 4 und eine Hydroxylzahl von $\geq 3$ mg KOH/g bis $\leq 112$ mg KOH/g (Molekulargewicht 500 bis 18000) aufweist. Bevorzugt beträgt der Füllstoffanteil des gefüllten Polyols in Komponente A1 höchstens 40 Gew.-%, bevorzugter höchstens 30 Gew.-%, noch bevorzugter höchstens 20 Gew.-%, jeweils bezogen auf das gefüllte Polyol.

Bevorzugt enthält die Zusammensetzung zur Herstellung des Polyurethan-Weichschaums 35 bis 85 pphp (parts per hundred parts polyol) an Komponente A1, bevorzugter 40 bis 80 pphp jeweils bezogen auf die Summe der Polyolkomponenten A1 und A2. In einer bevorzugten Ausführungsform enthält die Zusammensetzung zur Herstellung des Polyurethan-Weichschaums 75 bis 85 pphp an Komponente A1 bezogen auf die Summe der Polyolkomponenten A1 und A2. In einer weiteren bevorzugten Ausführungsform enthält die Zusammensetzung zur Herstellung des Polyurethan-Weichschaums 30 bis 50 pphp an Komponente A1 bezogen auf die Summe der Polyolkomponenten A1 und A2.

Komponente A2

Komponente A2 kein enthält gefülltes Polyol und enthält oder besteht aus Verbindungen die gegenüber Isocyanaten reaktiv sind mit einer OH-Zahl gemäß DIN 53240-1, Verfahren ohne Katalysator, Juni 2013, von $\geq 20$ bis $<$ 100 mg KOH/g. Bevorzugt sind in Komponente A2 Verbindungen enthalten mit mindestens zwei gegenüber Isocyanten reaktionsfähigen Wasserstoffatomen. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche mit einer OH-Zahl gemäß DIN 53240-1, Verfahren ohne Katalysator, Juni 2013, von $\geq 20$ bis $\leq 80$ mg KOH/g, bevorzugt $\geq 20$ bis $\leq 50$ mg KOH/g, ganz besonders bevorzugt $\geq 25$ bis $\leq 40$ mg KOH/g, z.B. mindestens 2, in der Regel 2 bis 6, vorzugsweise aber 2 bis 4, Hydroxylgruppen aufweisende Polyether und Polyester sowie Polycarbonate und Polyesteramide, wie sie für die Herstellung von homogenen und von zellförmigen Polyurethanen an sich bekannt sind. Bevorzugt enthält oder besteht Komponente A2 aus einem trifunktionellen Polyetherpolyol mit einer OH-Zahl gemäß DIN 53240-1, Verfahren ohne Katalysator, Juni 2013, $\geq 20$ bis $\leq 40$

mg KOH/g.

Für die Herstellung von Polyurethanschäumen im Kaltschaumverfahren werden bevorzugt mindestens zwei Hydroxylgruppen aufweisenden Polyether mit einer OH-Zahl gemäß DIN 53240-1, Verfahren ohne Katalysator, Juni 2013, von > 20 bis < 50 mg KOH/g eingesetzt, wobei die OH-Gruppen zu > 80 Mol-% aus primärem OH-Gruppen bestehen (Bestimmung mittels $^1$H-NMR (z.B. Bruker DPX 400, Deuterochloroform)). Besonders bevorzugt beträgt die OH-Zahl gemäß DIN 53240-1, Verfahren ohne Katalysator, Juni 2013, > 25 bis < 40 mg KOH/g, ganz besonders bevorzugt > 25 bis < 35 mg KOH/g.

Bevorzugt enthält die Zusammensetzung zur Herstellung des Polyurethan-Weichschaums 15 bis 65 pphp an Komponente A2, bevorzugter 20 bis 60 pphp jeweils bezogen auf die Summe der Polyolkomponenten A1 und A2. In einer bevorzugten Ausführungsform enthält die Zusammensetzung zur Herstellung des Polyurethan-Weichschaums 15 bis 25 pphp an Komponente A2 bezogen auf die Summe der Polyolkomponenten A1 und A2. In einer weiteren bevorzugten Ausführungsform enthält die Zusammensetzung zur Herstellung des Polyurethan-Weichschaums 45 bis 65 pphp an Komponente A2 bezogen auf die Summe der Polyolkomponenten A1 und A2.

Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt. Bevorzugt wird Wasser als Komponente A3 eingesetzt. Bevorzugt enthält die Zusammensetzung zur Herstellung des Polyurethan-Weichschaums 2 bis 3 pphp an Komponente A3, bezogen auf die Summe der Polyolkomponenten A1 und A2.

Komponente A4

Komponente A4 enthält Hilfs- und Zusatzstoffe , bevorzugt enthält Komponente A4

a) Katalysatoren (Aktivatoren), und/oder

b) oberflächenaktive Zusatzstoffe (Tenside), wie Emulgatoren und Schaumstabilisatoren, besonders bevorzugt ein wasserunlösliches Silikon, auch HR-Silikon genannt, wie z.B. Tegostab B8681, noch bevorzugter enthält Komponente A4 Tegostab B8783 LF2 von Evonik, einen emissionsarmen Silikonstabilisator, und/oder

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise TCPP), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Bevorzugt enthält Komponente A4 Hilfs- und Zusatzstoffe ausgewählt aus der Gruppe bestehend aus

- Diethanolamin, Vernetzter für HR Schaumstoffe, Handelsprodukt der BASF SE oder Evonik Industries
- Zinn-(2-ethylhexanoat),
- 1,4-Diazabicyclo[2,2,2]octan (TEDA) gelöst in Dipropylenglycol, als Handelsprodukt der Firma Rhein Chemie Rheinau GmbH unter dem Namen ADDOCAT 105 erhältlich,
- Bisdimethylaminoethylether "BDE", gelöst in Dipropylenglycol, als Handelsprodukt der Firma Rhein Chemie Rheinau GmbH unter dem Namen ADDOCAT 108 erhältlich,
- Silikonstabilisator, emissionsarm, als Handelsprodukt der Firma Evonik Industries, Essen, unter demNamen TEGOSTAB B 8783 LF2 erhältlich, und
- Vernetzer für HR-Schaumstoffe, Wässrige Lösung, Diethanolamin enthaltend, als Handelsprodukt der Firma Covestro AG unter dem Namen VP.PU PU 3266 erhältlich, oder Mischungen davon.

Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine und Zinn-Katalysatoren eingesetzt werden. Bevorzugt enthält Komponente A4 einen oder mehrere Katalysatoren ausgewählt aus der Gruppe bestehend aus Zinn-(II)-ethylhexanoat, Zinn-(II)-neodecanoat oder Zinn-(II)-ricinoleat oder Mischungen davon, bevorzugter Zinn-(II)-ethylhexanoat.

Bevorzugt enthält die Zusammensetzung zur Herstellung des Polyurethan-Weichschaums von 0,15 bis 0,25 pphp an Katalysator und 1,25 bis 2,85 pphp an weiteren, von Katalysatoren unterschiedlichen, Hilfs- und Zusatzstoffen

gemäß Komponente A4, jeweils bezogen auf die Summe der Polyolkomponenten A1 und A2.

Komponente B

Komponente B enthält oder besteht aus aliphatischen, cycloaliphatischen, araliphatischen, aromatischen und/oder heterocyclischen Di- und/oder Polyisocyanate eingesetzt, beispielsweise solche der Formel (III)

$$Q(NCO)_n \qquad (III)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate" oder "Prepolymere"), insbesondere solche modifizierten Polyisocyanate, die sich vom 2,4- und/oder 2,6-Toluylendiisocyanat bzw. vom 4,4'- und/oder 2,4'- und/oder 2,2'- Diphenylmethandiisocyanat ableiten. Vorzugsweise wird als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI"), besonders bevorzugt mindestens eine Verbindung ausgewählt aus der Gruppe bestehend aus 4,4'- und 2,4'- und 2,2'-Diphenylmethandiisocyanat und Polyphenylpolymethylenpolyisocyanat ("Mehrkern-MDI") eingesetzt. Die Gemische aus Diphenylmethandiisocyanat und Polyphenylenpolymethylenpolyisocyanat (pMDI) haben einen bevorzugten Monomergehalt zwischen 50 und 100 Gew.-%, bevorzugt zwischen 60 und 95 Gew.-%, besonders bevorzugt zwischen 75 und 90 Gew.-%.

In einer weiteren Ausführungsform enthält oder besteht Komponente B ein Gemisch aus 2,4- und 2,6-Toluylendiisocyanat. Bevorzugt weisen die Di- oder Polyisocyanate einen NCO-Gehalt von mindestens 30 Gew.-%, bevorzugt mindestens 40 Gew.-%, besonders bevorzugt mindestens 50 Gew.% auf, jeweils bezogen auf die Masse des jeweiligen Di- oder Polyisocyanats. Besonders bevorzugt enthält oder besteht Komponente B aus einem Gemisch aus 2,4- und 2,6-Toluylendiisocyanat mit einen NCO-Gehalt von mindestens 45 Gew.-%.

Bevorzugt enthält die Zusammensetzung zur Herstellung des Polyurethan-Weichschaums 25 bis 35 pphp an Komponente B, bevorzugter 30 bis 35 pphp jeweils bezogen auf die Summe der Polyolkomponenten A1 und A2.

Komponente C

Das organische Harnstoffderivat von Komponente C ist erhältlich oder erhalten durch Umsetzung von Harnstoff mit einem difunktionellen Amin, wobei das Amin ein zahlengemitteltes Molekulargewicht ermittelt nach DIN 55672-1 (März 2016), Teil 1, mit Gelpermeationschromatographie unter Verwendung von Polystyrolstandards und Tetrahydrofuran als Elutionsmittel von 200 bis 1000 g/mol aufweist, bevorzugt weist das Amin ein zahlengemitteltes Molekulargewicht von 200 bis 800 g/mol, bevorzugter von 200 bis 650 g/mol, besonders bevorzugt 400 bis 650 g/mol auf.

Bevorzugt ist das difunktionelle Amin ein Polyetheramin, dessen Rückgrat aus Struktureinheiten aufgebaut ist, die sich von Ethylenoxid und/oder Propylenoxid ableiten und das zwei terminale Aminogruppen aufweist. Bevorzugt werden als Polyetheramin Verbindungen gemäß den folgenden Formeln (I) oder (II)

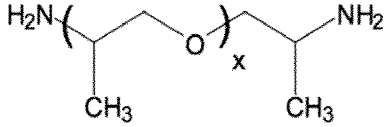

Formel (I)

mit
x = 5 - 10
oder

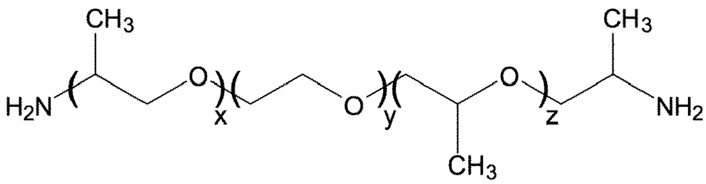

Formel (II)

mit
x = 1 - 10 und y = 5 - 15 und z = 1 - 10
eingesetzt.

Bevorzugt ist das organische Harnstoffderivat der Komponente C erhältlich oder erhalten durch Umsetzung einer Zusammensetzung enthaltend oder bestehend aus 65 bis 95 Gew.-Teilen, bevorzugt 75 bis 85 Gew.-Teilen des difunktionellen Amins und 35 bis 5 Gew.-Teilen, bevorzugt 25 bis 15 Gew.-Teilen Harnstoff, jeweils bezogen auf die gesamte Zusammensetzung.

Bevorzugt wird das organische Harnstoffderivat erhalten durch ein Verfahren umfassend die Schritte

- Bereitstellung von Harnstoff und eines difunktionellen Amins, so dass eine Reaktionsmischung erhalten wird
- Erhitzen der Reaktionsmischung auf eine Temperatur von 100 bis 130 °C, bevorzugter 115 bis 125 °C, bis eine maximale Temperatur von 130 bis 160 °C, bevorzugter von 140 bis 155 °C erreicht wird,
- nach der Abspaltung von Ammionak, bevorzugt von 3 bis 5 mol Ammoniak, Verringerung der Temperatur auf 100 bis 120 °C und Anlegen eines Vakuums,
- Hinzugabe von Wasser.

Bevorzugt weist das organische Harnstoffderivat der Komponente C eine Aminzahl nach DIN EN ISO 2114 (Juni 2002) von 0,2 bis 3,0 mg KOH/g, bevorzugt von 0,2 bis 2 mg KOH/g, auf.

Bevorzugt weist das organische Harnstoffderivat der Komponente C eine dynamische Viskosität nach DIN 53019-1 (September 2008), gemessen mit einem Rheometer mit einem Messkegel mit einem Durchmesser von 50 mm, Winkel 1° bei einer Scherrate von 200 $s^{-1}$, von 2000 bis 40.000 mPa*s, weiter bevorzugt von 2500 bis 39000 mPa*s, besonders bevorzugt 2500 bis 10000 mPa*s auf.

Durchführung des Verfahrens zur Herstellung von Polyurethanschaumstoffen:

Die Reaktionskomponenten werden nach dem an sich bekannten Einstufenverfahren, auch one-shot-Verfahren genannt, dem Prepolymerverfahren oder dem Semiprepolymerverfahren zur Umsetzung gebracht, wobei man sich oft maschineller Einrichtungen bedient. Beim Einstufen- oder one-shot-Verfahren werden Polyol, Polyisocyanat und Zusatzstoffe entsprechend der gewünschten Zusammensetzung dosiert und zu einer Reaktionsmischung vermischt. Die Reaktionsmischung wird dann aus der Mischkammer in eine Formgebungsvorrichtung eingetragen (Kunststoff-Handbuch, Band VII, herausgegeben von Vieweg und Höchtlen, Carl-Hanser-Verlag, München 1993, S. 139 ff., 197 ff.).

Mit dem erfindungsgemäßen Verfahren kann ein PUR-Schaumstoff entweder als Form- oder auch als Blockschaumstoff hergestellt werden. Polyurethan-Blockschaum wird nach seiner Herstellung konfektioniert, d.h. auf die gewünschte Form zugeschnitten. Polyurethan-Formschaum unterscheidet sich vom Blockschaum durch das Herstellungsverfahren. Formschaum wird durch Reaktion einer Reaktionsmischung zur Herstellung von Polyurethanschaum in einer Form hergestellt, so dass unmittelbar ein Formkörper erhalten wird.

Vorzugsweise wird das Verfahren zur Herstellung von Polyurethan-Weichschaum als one-shot-Verfahren zur Herstellung eines Blockschaumstoffs durchgeführt. Einzelheiten über bevorzugte Verarbeitungseinrichtungen für die Herstellung von Blockschaum werden im Kunststoff-Handbuch, Band VII, herausgegeben von Vieweg und Höchtlen, Carl-Hanser-Verlag, München 1993, z.B. auf den Seiten 197 ff., beschrieben. In einer anderen Ausführungsform wird das Verfahren zur Herstellung von Polyurethan-Weichschaum als Verfahren zur Herstellung eines Formschaumstoffs durchgeführt. Dabei kann die Reaktionsmischung entweder mit oder ohne äußere Wärmezufuhr aushärten, abhängig von dem Verfahren spricht man von Kaltschaum oder Heißschaum. Bevorzugt wird Kaltschaumstoff, sog. High-Resilient-Schaum, oder kurz HR-Schaumstoff. Einzelheiten über bevorzugte Verarbeitungseinrichtungen für die Herstellung von Formschaum werden im Kunststoff-Handbuch, Band VII, herausgegeben von Vieweg und Höchtlen, Carl-Hanser-Verlag, München 1993, z.B. auf den Seiten 236 ff., beschrieben.

Das Verfahren zur Herstellung von Polyurethan Weichschaum erfolgt bei einer Kennzahl von 80 bis 140, bevorzugt von 90 bis 130, bevorzugter von 100 bis 120, besonders bevorzugt von 105 bis 115. Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100$$

Ein weiterer Gegenstand der Erfindung ist Polyurethan-Weichschaum, insbesondere hochelastischer HR-Polyurethanweichschaum, erhältlich nach dem erfindungsgemäßen Verfahren. In einer weiteren Ausführungsform ist der Polyurethan-Weichschaum ein Blockschaum. Bevorzugt weist der Polyurethan-Weichschaum eine Rohdichte gemessen nach DIN EN ISO 845 (Oktober 2009) von 15 bis 50 kg/m$^3$, bevorzugt 25 bis 55 kg/m$^3$ auf. Bevorzugt weist der Polyurethan-Weichschaum eine Stauchhärte gemäß DIN EN ISO 3386-1 (Oktober 2015), 40 %, 4. Stauchung, von 1,5 bis 5,5 KPa, bevorzugt von 2,5 bis 4,5 KPa, auf. Bevorzugt weist der Polyurethan-Weichschaum einen Druckverformungsrest gemessen nach DIN ISO 1856 (September 2016) von nicht mehr als 5 % auf

Eine weitere Ausführungsform der Erfindung betrifft die Verwendung von so erhaltenem oder erhältlichen Polyurethanschaumstoffs zur Herstellung von Möbelpolsterungen, Textileinlagen, Matratzen, Automobilsitzen, Kopfstützen, Armlehnen, Sitzauflagen und Bauelementen.

Eine weitere Ausführungsform der Erfindung betrifft die Verwendung eines organischen Harnstoffderivats, insbesondere eines difunktionellen organischen Harnstoffderivats, das erhältlich ist oder erhalten ist durch Umsetzung von Harnstoff mit einem difunktionellen Amin, wobei das Amin ein zahlengemitteltes Molekulargewicht ermittelt nach DIN 55672-1 (März 2016), Teil 1, mit Gelpermeationschromatographie unter Verwendung von Polystyrolstandards und Tetrahydrofuran als Elutionsmittel von 200 bis 1000 g/mol aufweist in einem Verfahren zur Herstellung von Polyurethan-Weichschaum, insbesondere hochelastischem HR-Polyurethanweichschaum, zur Reduzierung des Kaltfließverhaltens.

In einer ersten Ausführungsform betrifft die Erfindung ein Verfahren zur Herstellung von Polyurethan-Weichschaum, wobei der Polyurethan-Weichschaum erhalten wird oder erhältlich ist durch Umsetzung einer Zusammensetzung enthaltend oder bestehend aus

- einer Komponente **A1** enthaltend oder bestehend aus mindestens einem gefüllten Polyol,
- einer Komponente **A2** enthaltend oder bestehend aus Verbindungen die gegenüber Isocyanaten reaktiv sind mit einer OH-Zahl gemäß DIN 53240-1, Verfahren ohne Katalysator, Juni 2013, von $\geq$ 20 bis < 100 mg KOH/g, und wobei die Komponente A2 kein gefülltes Polyol enthält
- einer Komponente **A3** enthaltend Wasser und/oder mindestens ein physikalisches Treibmittel,
- einer Komponente **A4** enthaltend Hilfs- und Zusatzstoffe, und
- einer Komponente **B** enthaltend oder bestehend aus Di- und/oder Polyisocyanaten,

wobei die Herstellung bei einer Kennzahl von 90 bis 140 erfolgt,
dadurch gekennzeichnet, dass
die Umsetzung unter Anwesenheit von

- 0,5 bis 3,0 Gew.-Teilen, bezogen auf die Summe der Komponenten A1 und A2, eines organischen Harnstoffderivats als Komponente **C** erfolgt, das erhältlich ist oder erhalten ist durch Umsetzung von Harnstoff mit einem difunktionellen Amin, wobei das Amin ein zahlengemitteltes Molekulargewicht ermittelt nach DIN 55672-1 (März 2016), Teil 1, mit Gelpermeationschromatographie unter Verwendung von Polystyrolstandards und Tetrahydrofuran als Elutionsmittel von 200 bis 1000 g/mol aufweist.

In einer zweiten Ausführungsform betrifft die Erfindung ein Verfahren nach Ausführungsform 1, dadurch gekennzeichnet, dass das difunktionelle Amin ein zahlengemitteltes Molekulargewicht ermittelt nach DIN 55672-1 (März 2016), Teil 1, mit Gelpermeationschromatographie unter Verwendung von Polystyrolstandards und Tetrahydrofuran als Elutionsmittel von 200 bis 800 g/mol, bevorzugt 200 bis 650 g/mol aufweist.

In einer dritten Ausführungsform betrifft die Erfindung ein Verfahren nach Ausführungsform 2, dadurch gekennzeichnet, dass das difunktionelle Amin ein Polyetheramin ist, dessen Rückgrat aus Struktureinheiten aufgebaut ist, die sich von Ethylenoxid und/oder Propylenoxid ableiten und das zwei terminale Aminogruppen aufweist.

In einer vierten Ausführungsform betrifft die Erfindung ein Verfahren nach Ausführungsform 3, dadurch gekennzeichnet, dass als Polyetheramin Verbindungen gemäß den folgenden Formeln (I) oder (II)

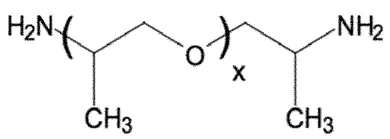

Formel (I)

mit

x = 5 - 10
oder

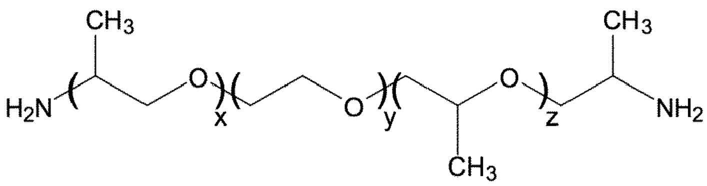

Formel (II)

mit
x = 1 - 10 und y = 5 - 15 und z = 1 - 10
eingesetzt werden.

In einer fünften Ausführungsform betrifft die Erfindung ein Verfahren nach einer der vorstehenden Ausführungsformen, dadurch gekennzeichnet, dass das organische Harnstoffderivat der Komponente C erhältlich ist oder erhalten ist durch Umsetzung einer Zusammensetzung enthaltend oder bestehend aus 65 bis 95 Gew.-Teilen, bevorzugt 75 bis 85 Gew.-Teilen des difunktionellen Amins und 35 bis 5 Gew.-Teilen, bevorzugt 25 bis 15 Gew.-Teilen Harnstoff, jeweils bezogen auf die gesamte Zusammensetzung.

In einer sechsten Ausführungsform betrifft die Erfindung ein Verfahren nach einer der vorstehenden Ausführungsformen, dadurch gekennzeichnet, dass das organische Harnstoffderivat der Komponente C eine Aminzahl nach DIN EN ISO 2114 (Juni 2002) von 0,2 bis 3,0 mg KOH/g, bevorzugt von 0,2 bis 2 mg KOH/g, aufweist.

In einer siebten Ausführungsform betrifft die Erfindung ein Verfahren nach einer der vorstehenden Ausführungsformen, dadurch gekennzeichnet, dass das organische Harnstoffderivat der Komponente C eine dynamische Viskosität nach DIN 53019-1 (September 2008), gemessen mit einem Rheometer mit einem Messkegel mit einem Durchmesser von 50 mm, Winkel 1° bei einer Scherrate von 200 $s^{-1}$, von 2000 bis 40.000 mPa*s, bevorzugt von 2.500 bis 39.000 mPa*s, aufweist.

In einer achten Ausführungsform betrifft die Erfindung ein Verfahren nach einer der vorstehenden Ausführungsformen, dadurch gekennzeichnet, dass die Komponente B aromatische Di- oder Polyisocyanate enthält oder daraus besteht, vorzugsweise Toluol-2,4-diisocyanat und/oder Toluol-2,6-diisocyanat.

In einer neunten Ausführungsform betrifft die Erfindung ein Verfahren nach einer der vorstehenden Ausführungsformen, dadurch gekennzeichnet, dass die Komponente A4 einen oder mehrere Katalysatoren ausgewählt aus der Gruppe bestehend aus Zinn-(II)-ethylhexanoat, Zinn-(II)-neodecanoat oder Zinn-(II)-ricinoleat oder Mischungen davon, bevorzugt Zinn-(II)-ethylhexanoat, enthält.

In einer zehnten Ausführungsform betrifft die Erfindung ein Verfahren nach einer der vorstehenden Ausführungsformen, dadurch gekennzeichnet, dass die Komponente A1 kein Styrol-Acrylnitril-gefülltes Polyol enthält.

In einer elften Ausführungsform betrifft die Erfindung Polyurethan-Weichschaum, insbesondere hochelastischen HR-Polyurethanweichschaum, erhältlich nach einem Verfahren gemäß einer der Ausführungsformen 1 bis 10.

In einer zwölften Ausführungsform betrifft die Erfindung Polyurethan-Weichschaum nach Ausführungsform 11, dadurch gekennzeichnet, dass der Polyurethan-Weichschaum eine Rohdichte gemessen nach DIN EN ISO 845 (Oktober 2009) von 15 bis 50 kg/$m^3$, bevorzugt 25 bis 55 kg/$m^3$ aufweist.

In einer dreizehnten Ausführungsform betrifft die Erfindung Polyurethan-Weichschaum nach einer der Ausführungsformen 11 oder 12, dadurch gekennzeichnet, dass der Polyurethan-Weichschaum eine Stauchhärte gemäß DIN EN ISO 3386-1 (Oktober 2015), 40 %, 4. Stauchung, von 1,5 bis 5,5 kPa, bevorzugt von 2,5 bis 4,5 kPa, aufweist.

In einer vierzehnten Ausführungsform betrifft die Erfindung Polyurethan-Weichschaum nach einer der Ausführungsformen 11 bis 13, dadurch gekennzeichnet, dass der Polyurethan-Weichschaum einen Druckverformungsrest gemessen nach DIN ISO 1856 (September 2016) von nicht mehr als 5 % aufweist.

In einer fünfzehnten Ausführungsform betrifft die Erfindung die Verwendung eines Polyurethanschaumstoffs nach einer der Ausführungsformen 11 bis 13 zur Herstellung von Möbelpolsterungen, Textileinlagen, Matratzen, Automobilsitzen, Kopfstützen, Armlehnen, Sitzauflagen und Bauelementen.

In einer sechzehnten Ausführungsform betrifft die Erfindung die Verwendung eines organischen Harnstoffderivats, insbesondere eines difunktionellen organischen Harnstoffderivats, das erhältlich ist oder erhalten ist durch Umsetzung von Harnstoff mit einem difunktionellen Amin, wobei das Amin ein zahlengemitteltes Molekulargewicht ermittelt nach DIN 55672-1 (März 2016), Teil 1, mit Gelpermeationschromatographie unter Verwendung von Polystyrolstandards und Tetrahydrofuran als Elutionsmittel von 200 bis 1000 g/mol aufweist in einem Verfahren zur Herstellung von Polyurethan-Weichschaum, insbesondere hochelastischem HR-Polyurethanweichschaum, zur Reduzierung des Kaltfließverhaltens.

**Beispiele**

Die vorliegende Erfindung wird anhand der nachfolgenden Beispiele erläutert, ohne jedoch darauf beschränkt zu sein. Es bedeuten:

A1: DESMOPHEN 7619 W, Polyol das eine Polyharnstoffdispersion (PHD) enthält; Füllstoffanteil: 20 Gew.-%; OH-Zahl (nach DIN 53240-1, Verfahren ohne Katalysator, Juni 2013) = 28,5 mg KOH/g ,
A2: ARCOL POLYOL 1374, trifunktionelles Polyetherpolyol, OH-Zahl (nach DIN 53240-1, Verfahren ohne Katalysator, Juni 2013) = 27 mg KOH/g; ohne Füllstoff,
A4: Diethanolamin, Vernetzter für HR Schaumstoffe, Handelsprodukt der BASF SE oder Evonik Industries
A4: DABCO T-9, Zinn-(2-ethylhexanoat), Handelsprodukt der Evonik Industries
A4: Desmorapid SO, Zinn-(II)-(2-ethylhexanoat)
A4: ADDOCAT 105, 1,4-Diazabicyclo[2,2,2]octan, "TEDA", gelöst in Dipropylenglycol Handelsprodukt der Firma Rhein Chemie Rheinau GmbH
A4: ADDOCAT 108, Bisdimethylaminoethylether "BDE", gelöst in Dipropylenglycol Handelsprodukt der Firma Rhein Chemie Rheinau GmbH
A4: TEGOSTAB B 8783 LF2, Handelsprodukt der Firma Evonik Industries, Essen, Silikonstabilisator, emissionsarm
A4: Zusatzmittel VP.PU PU 3266, Handelsprodukt der Firma Covestro, AG,
Vernetzer für HR-Schaumstoffe, Wässrige Lösung, Diethanolamin enthaltend
B: Desmodur T 80, Gemisch aus 2,4-TDI und 2,6-TDI, Handelsprodukt der Firma Covestro AG, NCO-Gehalt mind. 48 %

Edukte für das jeweilige Anti-Cold-Flow-Additiv:

- JEFFAMIN D -400, Handelsprodukt der Firma Huntsman
  Bifunktioneller aminoterminierter Polyether, wobei der Polyether aus Struktureinheiten aus Propylenoxid besteht, MW 430 g/mol
- JEFFAMIN ED-600 Handelsprodukt der Firma Huntsman
  Bifunktioneller aminoterminierter Polyether, wobei der Polyether aus Struktureinheiten aus Propylenoxid und Ethylenoxid besteht, MW 600 g/mol
- JEFFAMIN T-5000 Handelsprodukt der Firma Huntsman
  Trifunktioneller aminoterminierter Polyether, wobei der Polyether dargestellt wird durch Reaktion einer Mischung enthaltend Propylenoxid mit einem Triol und anschließender Aminierung der terminalen Hydroxylgruppen, gemitteltes MW 5000 g/mol
- JEFFAMIN M-600 Handelsprodukt der Firma Huntsman
  Monofunktioneller aminoterminierter Polyether, wobei der Polyether aus Struktureinheiten aus Propylenoxid und Ethylenoxid besteht, MW $\approx$ 600 g/mol
- Diethylentriamin
- Harnstoff

Bei den angegebenen Molekulargewichten der aminoterminierten Polyether handelt es sich jeweils um das zahlengemittelte Molekulargewicht ermittelt nach DIN 55672-1 (März 2016), Teil 1, mit Gelpermeationschromatographie unter Verwendung von Polystyrolstandards und Tetrahydrofuran als Elutionsmittel
Herkömmliche Anti-Cold-Flow-Additive:

ORTEGOL 204 von Evonik Vernetzer mit verzögertem Reaktionsprofil

KOSMOS 54 von Evonik, ein Zinksalz

**Messmethoden**

Dynamische Viskosität:

Rheometer MCR 51 der Firma Anton Paar entsprechend DIN 53019-1: (September 2008) mit einem Messkegel CP 50-1, Durchmesser 50 mm, Winkel 1° bei Scherraten von 25, 100, 200 und 500 $s^{-1}$. Die erfindungsgemäßen und nicht erfindungsgemäßen Harnstoffderivate zeigen von der Scherrate unabhängige Viskositätswerte.

| | |
|---|---|
| Aminzahl: | gemäß DIN EN ISO 2114 (Juni 2002) ermittelt. |
| Wassergehalt: | gemäß DIN 51777-1 (März 1983) ermittelt. |
| Hydroxylzahl: | gemäß DIN 53240-1 (Verfahren ohne Katalysator, Juni 2013) ermittelt |
| zahlengemitteltes MW | ermittelt nach DIN 55672-1 (März 2016), Teil 1, mit Gelpermeationschromatographie unter Verwendung von Polystyrolstandards und Tetrahydrofuran als Elutionsmittel |
| Rohdichte | gemäß DIN EN ISO 845 (Oktober 2009) ermittelt. |
| Stauchhärte 40 % (4. Stauchung) | gemäß DIN EN ISO 3386-1 (Oktober 2015) ermittelt. |
| Druckverformungsrest | gemäß DIN EN ISO 1856 (September 2016) ermittelt |
| Zugfestigkeit | gemäß DIN EN ISO 1798 (April 2004) ermittelt |
| Bruchdehnung | gemäß DIN EN ISO 1798 (April 2004) ermittelt |

Der Cold-Flow-Effekt wurde bei 22-25 °C und einer Luftfeuchtigkeit von 40-65 % r.F. bestimmt.
Eine Schäumform mit einer Größe von ca. 13,0 cm Höhe und 13 cm Breite und 26,2 cm Länge wird mit Folie ausgelegt. Es werden Pappdeckel (24,4 cm x 10,8 cm) vorbereitet. Die Menge an Reaktionsmischung für den jeweiligen PUR-Schaum wird so bemessen, dass der Schaum nicht über den Rand der Schäumform steigt. Die Reaktionsmischung wird gerührt und in die Schäumform gegossen. Der Pappdeckel wird auf die Schaumoberfläche gelegt, sobald ca. 50 % der Steighöhe des PUR-Schaums erreicht ist und mit dem leichten Pappdeckel beschwert. Während des restlichen Steigvorganges des Schaums ist darauf zu achten dass dieser Pappdeckel in der Mitte des Päckchens sowie in waagrechter Lage bleibt. Der Pappdeckel soll dafür sorgen, dass der Schaum eine möglichst waagerechte Oberfläche hat, die Oberfläche also nicht gebogen ist.

Unabhängig von der tatsächlichen Steigzeit des Schaumes wird drei Minuten nach der Startzeit, also dem Befüllen der Schäumform, der Schaumstoff entformt, so dass ein Probenkörper erhalten wird. Die Höhe des Probenkörpers wird gemessen (= Anfangshöhe)

Nach insgesamt fünf Minuten nach Reaktionsbeginn wird der Probenkörper oben und unten so fixiert, dass er nicht umfallen kann. Die obere Seite des Probenkörpers wird mit einem 1,43 kg schweren Körper beschwert wird (Platte 93g + Holzstempel 337g + 1kg).

Die Schäume werden über Nacht in der oben beschriebenen Position belassen, also beschwert. Am nächsten Tag, 24 Stunden nach dem Beschweren wird die Höhe des Probenkörpers erneut gemessen (= Endhöhe).

Die Höhendifferenz - ausgedrückt in % - gibt den Cold-Flow-Wert an. Je kleiner der Wert, desto schlechter ist das Cold-Flow-Verhalten des Schaumstoffs (z.B.: 80 % charakterisiert ein gutes Cold-Flow-Verhalten, während 50 % einen eher schlechtes Cold-Flow-Verhalten beschreibt).

Der Cold-Flow-Effekt wurde nach der folgenden Formel berechnet:

$$\text{Cold-Flow [\%]} = 100 \text{ x Endhöhe [cm] / Anfangshöhe [cm]}$$

**A Herstellung von Anti-Cold-Flow-Additiven**

**1. Herstellung eines difunktionelles organischen Harnstoffderivats (Anticold-Flow-Additivs ACF-1, basierend auf Jeffamin D-400, erfindungsgemäß):**

In einen Glaskolben wurden 2,5 mol (1000 g) Jeffamine D-400 vorgelegt. Anschließend wurden 5,0 mol (300 g) Harnstoff hinzugegeben. Ausgangtemperatur: 24 °C. Danach wurde die Heizung angestellt und die Mischung erhitzt. Bei 125 °C wurde allmähliche Gasentwicklung und starkes Aufschäumen registriert. Die maximal erreichte Sumpftemperatur betrug 150 °C. Nachdem 4,3 mol Ammoniak abgespalten waren, wurde die Temperatur der Reaktionsmischung auf 100 °C verringert und ein Vakuum angelegt. Abschließend wurden 135 g Wasser hinzugegeben.

Die Eigenschaften des so hergestellten Harnstoffderivats wurden bestimmt:

NH-Zahl nach DIN EN ISO 2114 (Juni 2002): 0,8 mg KOH/g
Wassergehalt nach DIN 51777-1 (März 1983): 10,4 %
Viskosität nach DIN 53019-1: (September 2008) (25 °C): 9150 mPas

**2. Herstellung eines difunktionellen organischen Harnstoffderivats (Anticold-Flow-Additivs ACF-2, basierend auf Jeffamin ED-600, erfindungsgemäß):**

In einen Glaskolben wurden 1,67 mol (1000 g) Jeffamine ED-600 vorgelegt. Anschließend wurden 3,33 mol (200 g) Harnstoff hinzugegeben. Ausgangtemperatur: 24 °C. Danach wurde die Heizung angestellt und die Mischung erhitzt. Bei 117 °C wurde allmähliche Gasentwicklung und starkes Aufschäumen registriert. Die maximal erreichte Sumpftemperatur betrug 155 °C. Nachdem 3,1 mol Ammoniak abgespalten waren, wurde die Temperatur der Reaktionsmischung auf 100 °C verringert und ein Vakuum angelegt. Abschließend wurden 125 g Wasser hinzugegeben.
Die Eigenschaften des so hergestellten Harnstoffderivats wurden bestimmt:

NH-Zahl nach DIN EN ISO 2114 (Juni 2002): 1,5 mg KOH/g
Wassergehalt nach DIN 51777-1 (März 1983) : 11,5 %
Viskosität nach DIN 53019-1: (September 2008) (25 °C): 2500 mPas

**3. Herstellung eines mono-, di- oder polyfunktionellen organischen Harnstoffderivats (Anticold-Flow-Additivs ACF-3, basierend auf Jeffamin T-5000, nicht erfindungsgemäß):**

In einen Glaskolben wurden 0,40 mol (2000 g) Jeffamine T-5000 vorgelegt. Anschließend wurden 1,2 mol (72 g) Harnstoff hinzugegeben. Ausgangtemperatur: 24 °C. Danach wurde die Heizung angestellt und die Mischung erhitzt. Bei 118 °C wurde allmähliche Gasentwicklung und starkes Aufschäumen registriert. Die maximal erreichte Sumpftemperatur betrug 155 °C. Nachdem 1,1 mol Ammoniak abgespalten waren, wurde die Reaktionsmischung bei 155 °C gehalten und ein Vakuum angelegt. Das Produkt ließ sich nicht mit Wasser mischen, sodass auf eine Zugabe von Wasser verzichtet wurde.
Die Eigenschaften des so hergestellten Harnstoffderivats wurden bestimmt:

NH-Zahl nach DIN EN ISO 2114 (Juni 2002): 0,2 mg KOH/g
Wassergehalt nach DIN 51777-1 (März 1983) : 0,01 %
Viskosität nach DIN 53019-1: (September 2008) (25 °C): 39000 mPas

**4. Herstellung eines mono-, di- oder polyfunktionellen organischen Harnstoffderivats (Anticold-Flow-Additivs ACF-4, basierend auf Diethylentriamin, nicht erfindungsgemäß):**

In einen Glaskolben wurden 4,5 mol (464 g) Diethylentriamin vorgelegt. Anschließend wurden 13,5 mol (810 g) Harnstoff hinzugegeben. Ausgangtemperatur: 24 °C. Danach wurde die Heizung angestellt und die Mischung erhitzt. Bei 127 °C wurde allmähliche Gasentwicklung und starkes Aufschäumen registriert. Die maximal erreichte Sumpftemperatur betrug 167 °C. Nachdem 13,5 mol Ammoniak abgespalten waren, wurde die Temperatur der Reaktionsmischung auf 140 °C verringert und ein Vakuum angelegt. Abschließend wurden 185 g Wasser hinzugegeben.
Die Eigenschaften des so hergestellten Harnstoffderivats wurden bestimmt:

NH-Zahl nach DIN EN ISO 2114 (Juni 2002): 4.5 mg KOH/g
Wassergehalt: 15 % (berechnet)
Viskosität nach DIN 53019-1: (September 2008) (25 °C): 23000 mPas

**5. Herstellung eines mono- oder difunktionellen organischen Harnstoffderivats (Anticold-Flow-Additivs ACF-5, basierend auf Jeffamin D-400 und p-Toluylenisocyanant, nicht erfindungsgemäß):**

In einen Glaskolben wurden 0,25 mol (100 g) Jeffamine D-400 vorgelegt. Anschließend wurden 0,50 mol (67 g) Toluylendiisocyanat hinzugegeben. Hierbei erwärmte sich die Reaktionsmischung auf 70-80 °C. Abschließend wurde solange Wasser zugegeben bis sich 2 Phasen bildeten. Die Wasser-Phase wurde abgetrennt und die organische Phase mit dem Polyether Arcol® 1374 verdünnt (2 Gew.Teile Harnstoffderivat + 1 Gew.Teil Polyether)
Die Eigenschaften des so hergestellten Polyether-Harnstoffderivat-Gemischs wurden bestimmt:

NH-Zahl nach DIN EN ISO 2114 (Juni 2002): 0,4 mg KOH/g
Wassergehalt nach DIN 51777-1 (März 1983) : 4,1 %
Viskosität nach DIN 53019-1: (September 2008) (25 °C): 17000 mPas

**6. Herstellung eines monofunktionellen organischen Harnstoffderivats (Anticold-Flow-Additivs ACF-6, basierend auf Jeffamin M-600, nicht erfindungsgemäß):**

In einen Glaskolben wurden 1,64 mol (984 g) Jeffamine M-600 vorgelegt. Anschließend wurden 1,64 mol (99 g) Harnstoff hinzugegeben. Ausgangtemperatur: 24 °C. Danach wurde die Heizung angestellt und die Mischung erhitzt. Bei 130 °C wurde allmähliche Gasentwicklung und starkes Aufschäumen registriert. Die maximal erreichte Sumpftemperatur betrug 170 °C. Nachdem 1,64 mol Ammoniak abgespalten waren, wurde die Temperatur der Reaktionsmischung auf 130 °C verringert und ein Vakuum angelegt. Das Produkt ließ sich nicht mit Wasser mischen, sodass auf eine Zugabe von Wasser verzichtet wurde.

Die Eigenschaften des so hergestellten Harnstoffderivats wurden bestimmt:

NH-Zahl nach DIN EN ISO 2114 (Juni 2002): 1,2 mg KOH/g
Viskosität nach DIN 53019-1: (September 2008) (25 °C): 600 mPas

**B Herstellung vonTDI-basierten HR-Polyurethanschäumen enthaltend erfindungsgemäße, nicht-erfindungsgemäße und herkömmliche Additive**

Die Herstellung der HR-Schaumstoffe erfolgte nach dem sogenannten "One-Shot-Verfahren". Hierzu wurden die folgenden Komponenten nacheinander in einen Pappbecher mit Metallboden eingewogen (Rohstofftemperatur der Komponenten: jeweils 24 °C):

- Polyolkomponenten A1 und A2 (DESMOPHEN 7619 W, ARCOL POLYOL 1374)
- Wasser
- Hilfs- und Zusatzsstoffe
- Silikonstabilisator (TEGOSTAB BF 8783 LF2)
- Vernetzer (Diethanolamin)
- ADDOCAT 105
- ADDOCAT 108
- das jeweilige Anti-Cold-Flow-Additiv

Nach der Einwaage der o.g. Komponenten wurde die Mischung für 20 Sekunden mit einem Tellerrührer gerührt (Rührgeschwindigkeit 1200 $min^{-1}$). Danach wurde Zinnoctoat (DESMORAPID SO) hinzugefügt und die Mischung nochmal für 10 Sekunden gerührt (Rührgeschwindigkeit 1200 $min^{-1}$). Anschließend wurde die berechnete Menge DESMODUR T 80 hinzugegeben, die Stoppuhr in Gang gesetzt und die Reaktionsmischung nochmal für 7 Sekunden gerührt (Rührgeschwindigkeit 1200 $min^{-1}$). Danach wurde die Mischung in eine mit Polyethylenfolie ausgekleidete Rechteckform gegossen und das Schäumverhalten der Reaktionsmischung beobachtet.

Die Polyurethan-Weichschäume der Tabellen 1 und 2 enthielten alle Toluylendiisocyanat (TDI) und Zinn-2-ethylhexanoat (Desmorapid SO). Sie enthielten somit die gängigsten Komponenten für die Herstellung von Polyurethan-Weichschäumen insbesondere von hochelastischen HR-Weichschaumstoffen, welche gleichzeig diejenigen Komponenten sind, die zu einem vergleichsweise hohem Cold-Flow-Effekt, also einer vergleichsweise starken Deformation der Weichschäume bei Lagerung führen.

**Tabelle 1**

| | | Erfindungsgemäß | Vergleichsbeispiele | | | | | |
|---|---|---|---|---|---|---|---|---|
| **Versuch** | | **1** | **2** | **3** | **4** | **5** | **6** | **7** |
| ADDITIV | [pphp] Additiv | 3 pphp ACF-1 | 0 | 0.8 pphp Ortegol<br>0.10 pphp Kosmos | 1.6 pphp Ortegol<br>0.20 pphp Kosmos | 2 pphp Ortegol<br>0.25 pphp Kosmos | 3 pphp Ortegol<br>0.50 pphp Kosmos | 3 pphp ACF-6 |
| DESMOPHEN 7619 W | [pphp] | 80 | 80 | 80 | 80 | 80 | 80 | 80 |
| ARCOL POLYOL 1374 | [pphp] | 20 | 20 | 20 | 20 | 20 | 20 | 20 |
| WASSER (zugese tzt) | [pphp] | 2 | 2 | 2 | 2 | 2 | 1 | 2 |
| TEGOSTAB B 8783 LF2 | [pphp] | 0,3 | 0,3 | 0,3 | 0,3 | 0,3 | 0,3 | 0,5 |
| Diethanolamin | [pphp] | 1,25 | 1,25 | 0 | 0 | 0 | 0 | 1,15 |
| ADDOCAT 105 | [pphp] | 0,1 | 0,1 | 0,1 | 0,1 | 0,1 | 0,1 | 0,1 |
| ADDOCAT 108 | [pphp] | 0,05 | 0,05 | 0,05 | 0,05 | 0,05 | 0,05 | 0,05 |
| Desmorapid SO | [pphp] | 0,18 | 0,18 | 0,21 | 0,17 | 0,16 | 0,14 | 0,20 |
| DESMODUR T 80 | [pphp] | 33,8 | 33,8 | 31,5 | 32,7 | 33,3 | 34,8 | 34,3 |
| WASSER gesamt | [pphp] | 2,4 | 2,4 | 2,4 | 2,4 | 2,4 | 2,4 | 2,5 |
| INDEX | [-] | 110 | 110 | 110 | 110 | 110 | 110 | 109 |
| Startzeit | [s] | 10 | 10 | 10 | 10 | 10 | 10 | 10 |
| Steigzeit | [s] | 100 | 120 | 120 | 120 | 120 | 120 | 100 |
| **Cold-Flow-Effekt** | **[%]** | **87,50** | **53,00** | **78,00** | **74,00** | **72,00** | **47,00** | **53,00** |
| Rohdichte | [kg/m$^2$] | 41,5 | 36,2 | 43,3 | 40,2 | 39,7 | 37,9 | 37,2 |
| Stauchhärte 40%; 4. Stauchung | [kPa] | 4,26 | 3,66 | 6,95 | 5,8 | 5,48 | 4,85 | 4,05 |
| Druckverformungsrest 50% | [%] | 4,8 | 3,9 | 3,3 | 3,2 | 3,6 | 5,1 | 4,2 |
| Zugfestigkeit | [kPa] | 138 | 150 | 206 | 152 | 147 | 141 | 149 |
| Bruchdehnung | [%] | 160 | 161 | 148 | 133 | 137 | 127 | 154 |
| Anfangshöhe | [cm] | 16,0 | 16,0 | 9,0 | 13,5 | 14,5 | 15,0 | 16,0 |
| Endhöhe | [cm] | 14,0 | 8,5 | 7 | 10 | 10,5 | 7 | 8,5 |
| pphp = parts per hundred parts polyol | | | | | | | | |

Tabelle 1 zeigt Polyurethan-Weichschäume ohne Additiv (Vergleichsbeispiel 2), Polyurethan-Schäume enthaltend Additiv ACF-1 (erfindungsgemäßes Beispiel 1) und Polyurethan-Schäume enthaltend herkömmliche Produkte, nämlich die Kombination von Ortegol 204 und Kosmos 54, beide von Evonik (Vergleichsbeispiel 3 bis 6). Außerdem wird in Vergleichsbeispiel 7 ein Polyurethan-Schaum mit einem nicht erfindungsgemäßen monofunktionellen organischen Harnstoffderivat gezeigt (ACF-6).

Die experimentellen Daten zeigen, dass der Polyurethan-Weichschaum aus dem erfindungsgemäßen Beispiel 1 mit dem erfindungsgemäßen Anti-Cold-Flow-Additiv im Vergleich zu den Polyurethan-Weichschäumen aus den Vergleichsbeispielen 3 bis 7 mit nicht-erfindungsgemäßen, herkömmlichen Cold-Flow-Additiven die geringste Deformation aufwies. Das erfindungsgemäße Anti-Cold-Flow-Additiv führte zu der stärksten Verringerung des Cold-Flow-Effekts (Kaltfließverhalten). Darüber hinaus wurden die mechanischen Eigenschaften des Polyurethan-Weichschaums durch das erfindungsgemäße Anti-Cold-Flow-Additiv nur geringfügig verändert, wie insbesondere der Vergleich mit dem Schaum aus Vergleichsbeispiel 2 ohne Anti- Cold-Flow-Additiv zeigt. Dies gilt insbesondere für die Stauchhärte.

Der Vergleich des Polyurethan-Weichschaums aus dem erfindungsgemäßen Beispiel 1 mit demjenigen aus Vergleichsbeispiel 7 zeigt, dass ein monofunktionelles Harnstoffderivat nicht zu einer Verringerung des Cold-Flow-Effekts führt. Vielmehr war die Endhöhe des Polyurethan-Weichschaums aus Vergleichsbeispiel 7 genauso hoch wie diejenige des Polyurethan-Weichschaums aus Vergleichsbeispiel 2, der kein Anti-Cold-Flow- Additiv enthielt.

Die Polyurethan-Weichschäume der Vergleichsbeispiele 3 bis 6 enthielten herkömmliche Produkte zur Verringerung des Cold-Flow-Effekts, nämlich die Kombination von Ortegol 204 und Kosmos 54, beide von Evonik. Keiner dieser Polyurethan-Weichschäume wies am Ende des Testverfahrens eine Höhe auf, die mehr als 80 % seiner jeweiligen Ausgangshöhe entsprach. Darüber hinaus ist anhand der Vergleichsbeispiele 3 bis 6 erkennbar, dass herkömmliche Anti-Cold-Flow-Produkte nur in einem engen Dosierungsbereich der Deformation der Schäume entgegenwirken, jedoch nicht in gleichem Maße wie das erfindungsgemäße Anti-Cold-Flow-Additiv. Die Schäume der Vergleichsbeispiele 3 bis 6 enthielten jeweils eine andere Menge eines herkömmlichen Anti-Cold-Flow-Additivs, wobei der Schaum aus Vergleichsbeispiel 3 die geringste Menge und der Schaum aus Vergleichsbeispiel 6 die höchste Menge an Additiv aufwies und der Schaum aus Vergleichsbeispiel 5 das vom Hersteller empfohlene Mischungsverhältnis der Komponenten Ortegol 204 und Kosmos 54 enthielt. Sobald jedoch nur geringfügig von der empfohlenen Menge oder dem empfohlenen Mischungsverhältnis abgewichen wurde, wurde die Deformation der Schäume kaum oder sogar negativ beeinflusst. Der Schaum aus Vergleichsbeispiel 5 mit dem vom Hersteller empfohlenen Mischungsverhältnis zeigte immer noch eine Deformation von mehr als 20 % im Vergleich zur Ausgangshöhe. Die Schäume der Vergleichsbeispiele 3 und 6 enthielten weniger (Bsp. 3) oder mehr (Bsp. 6) des herkömmlichen Anti-Cold-Flow-Additivs und wiesen sogar eine geringere Endhöhe auf, als der Schaum aus Vergleichsbeispiel 2, der gar kein Anti-Cold-Flow-Additiv enthielt. Darüber hinaus wurde insbesondere die Stauchhärte der Polyurethan-Weichschäume der Vergleichsbeispiele 3 bis 6 im Vergleich mit Vergleichsbeispiel 2 (ohne Anti-Cold-Flow-Additiv) beeinflusst; die Schäume waren härter.

Bei einer vergleichbaren Menge an Anti-cold-Flow wurden mit den erfindungsgemäßen Anti-Cold-Flow-Additiv ein weitaus verbessertes Cold-Flow-Verhalten erreicht, wie der Vergleich des erfindungsgemäßen Beispiels 1 mit dem Vergleichsbeispiel 6 zeigt. Gleichzeitig wird die Bruchdehnung, bei gleicher Menge an Additiv durch das erfindungsgemäße Anti-Cold-Flow-Additiv weniger beeinflusst als durch herkömmliche Anti-Cold-Flow-Additive.

**Tabelle 2**

| | | Erfindungsgemäß | | | Vergleich | | | |
|---|---|---|---|---|---|---|---|---|
| **Versuch** | | **8** | **9** | **10** | **11** | **12** | **13** | **14** |
| ADDITIV | [pphp] | 1 pphp ACF-1 | 2 pphp ACF-1 | 3 pphp ACF-2 | 0 | 3 pphp ACF-3 | 3 pphp ACF-4 | 3 pphp ACF-5 |
| DESMOPHEN 7619 W | [pphp] | 45 | 45 | 45 | 45 | 45 | 45 | 45 |
| ARCOL POLYOL 1374 | [pphp] | 55 | 55 | 55 | 55 | 55 | 55 | 55 |
| WASSER (zugesetzt) | [pphp] | 1,38 | 1,38 | 1,38 | 1,38 | 1,08 | 1,13 | 1,45 |
| TEGOSTAB B 8783 LF2 | [pphp] | 0,35 | 0,35 | 0,35 | 0,35 | 0,35 | 0,35 | 0,35 |
| ZUSATZMITTE L VP.PU PU 3266 | [pphp] | 2,00 | 2,00 | 2 | 2 | 3 | 2 | 2 |
| ADDOCAT 105 | [pphp] | 0,10 | 0,10 | 0,10 | 0,10 | 0,14 | 0,10 | 0,10 |
| ADDOCAT 108 | [pphp] | 0,05 | 0,05 | 0,05 | 0,05 | 0,05 | 0,05 | 0,05 |
| DABCO T-9 | [pphp] | 0,22 | 0,22 | 0,22 | 0,22 | 0,22 | 0,23 | 0,23 |

(fortgesetzt)

| | | Erfindungsgemäß | | | Vergleich | | | |
|---|---|---|---|---|---|---|---|---|
| **Versuch** | | **8** | **9** | **10** | **11** | **12** | **13** | **14** |
| DESMODUR T 80 | [pphp] | 32,3 | 32,3 | 32,3 | 32,3 | 34,4 | 34,4 | 34,5 |
| WASSER gesamt | [pphp] | 2,20 | 2,20 | 2,20 | 2,20 | 2,20 | 2,40 | 2,40 |
| INDEX | [-] | 110 | 110 | 110 | 110 | 110 | 110 | 110 |
| Startzeit | [s] | - | - | 11 | 10 | 10 | 10 | 10 |
| Steigzeit | [s] | - | - | 110 | 105 | 120 | 105 | 105 |
| **Cold-Flow-Effekt** | **[%]** | **60** | **72** | **81** | **50** | **27** | **39** | **33** |
| Rohdichte | [kg/m$^2$] | 45,3 | 42,3 | 38,2 | 40,9 | 44,3 | 37,5 | 39,0 |
| Stauchhärte 40%; 4. Stauchung | [kPa] | 4,31 | 3,65 | 2,77 | 3,45 | 4,37 | 3,65 | 3,82 |
| Druckverformungsrest 50% | [%] | 4,4 | 4,8 | 3,2 | 3,8 | 7,2 | 4 | 5 |
| Zugfestigkeit | [kPa] | 97 | 102 | 108 | 116 | 122 | 124 | 107 |
| Bruchdehnung | [%] | 140 | 159 | 154 | 144 | 121 | 153 | 137 |
| Anfangshöhe | [cm] | 15,0 | 16,0 | 15,5 | 15,0 | 15,0 | 16,5 | 15,0 |
| Endhöhe | [cm] | 9,0 | 11,5 | 12,5 | 7,5 | 4,0 | 6,5 | 5,0 |

Die Angaben in pphp sind jeweils auf die Summe der Polyolkomponenten bezogen.

Die erfindungsgemäßen Beispiele 8 bis 10 zeigen, dass das erfindungsgemäße Anti-Cold-Flow-Additiv in verschiedenen Mengen eingesetzt werden kann. Selbst bei einer kleinen Menge von 1 pphp in Bezug auf die Polyolkomponente war der Cold-Flow-Effekt deutlich geringer als bei dem Polyurethan-Schaum ohne eine Anti-Cold-Flow-Additiv aus Vergleichsbeispiel 11.

Die Polyurethanschäume des erfindungsgemäßen Beispiels 10 und der Vergleichsbeispiele 12 bis 14 enthielten jeweils die gleiche Menge eines Anti-Cold-Flow-Additivs und verdeutlichen, dass die Verringerung des Cold-Flow-Effekts von der Struktur des Additivs abhängt. Anhand der Vergleichsbeispiele 12 und 13 ist erkennbar, dass Additive, die auf einem trifunktionellen Amin basieren den Cold-Flow-Effekt nicht verringern gegenüber einem Polyurethanschaum ohne Anti-Cold-Flow-Additiv. Des Weiteren zeigt Vergleichsbeispiel 14, dass die Umsetzung eines difunktionellen Amins dessen Rückgrat aus Struktureinheiten aufgebaut ist, die sich von Ethylenoxid und/oder Propylenoxid ableiten und das zwei terminale Aminogruppen aufweist mit TDI nicht zu der Verringerung des Cold-Flows führt.

Die experimentellen Daten zeigen, dass die Verwendung des erfindungsgemäßen Anti-Cold-Flow-Additivs den Cold-Flow-Effekt bei Polyurethan-Weichschäumen signifikant verringerte. Dies äußert sich in den höheren %-Werten des Cold-Flow-Effekts. Je höher der %-Werte des Cold-Flow-Effekts, desto geringer (besser) ist der Cold-Flow des Polyurethan Weichschaumes, d.h. desto geringer verändert er seine Form, bzw. umso besser behält der Weichschaum seine ursprüngliche Form bei.

**Weitere nicht-erfindungsgemäße Anti-Cold-Flow-Additive**

Es wurde ein Anti-Cold-Flow-Additiv hergestellt aus Harnstoff und einem bifunktionellen Amin mit einem zahlengemittelten Molekulargewicht von 4000 g/mol (Jeffamin D4000). Die Verwendung dieser Harnstoffderivate (basierend auf Jeffamin D4000) bei der Herstellung eines Polyurethan-Schaumstoffs führten zu einem vollständigen Kollaps des Schaumes bei allen getesteten Einsatzmengen, d.h. wurde kein Polyurethan-Weichschaum erhalten.

Harnstoffderivate basierend auf Diaminen mit einem Molekulargewicht < 200 g/mol sind Feststoffe, die mangels Löslichkeit in der Zusammensetzung zur Herstellung eines Polyurethan-Weichschaums nicht eingesetzt werden können.

Die Beispiele zeigen, dass das Molekulargewicht der difunktionellen Amine auch eine entscheidende Rolle hat, da außerhalb eines Bereichs von 200 bis 1000 g/mol keine Polyurethanschäume erhalten werden können, bzw. das Additiv nicht eingesetzt werden kann.

**Patentansprüche**

1. Verfahren zur Herstellung von Polyurethan-Weichschaum, wobei der Polyurethan-Weichschaum erhalten wird oder erhältlich ist durch Umsetzung einer Zusammensetzung enthaltend oder bestehend aus

   - einer Komponente **A1** enthaltend oder bestehend aus mindestens einem gefüllten Polyol,
   - einer Komponente **A2** enthaltend oder bestehend aus Verbindungen die gegenüber Isocyanaten reaktiv sind mit einer OH-Zahl gemäß DIN 53240-1, Verfahren ohne Katalysator, Juni 2013, von ≥ 20 bis < 100 mg KOH/g, und wobei die Komponente A2 kein gefülltes Polyol enthält
   - einer Komponente **A3** enthaltend Wasser und/oder mindestens ein physikalisches Treibmittel,
   - einer Komponente **A4** enthaltend Hilfs- und Zusatzstoffe, und
   - einer Komponente **B** enthaltend oder bestehend aus Di- und/oder Polyisocyanaten,

   wobei die Herstellung bei einer Kennzahl von 90 bis 140 erfolgt,
   **dadurch gekennzeichnet, dass**
   die Umsetzung unter Anwesenheit von

   - 0,5 bis 3,0 Gew.-Teilen, bezogen auf die Summe der Komponenten A1 und A2, eines organischen Harnstoffderivats als Komponente **C** erfolgt, das erhältlich ist oder erhalten ist durch Umsetzung von Harnstoff mit einem difunktionellen Amin, wobei das Amin ein zahlengemitteltes Molekulargewicht ermittelt nach DIN 55672-1 (März 2016), Teil 1, mit Gelpermeationschromatographie unter Verwendung von Polystyrolstandards und Tetrahydrofuran als Elutionsmittel von 200 bis 1000 g/mol aufweist.

2. Verfahren nach Anspruch 1, **dadurch gekennzeichnet, dass** das difunktionelle Amin ein zahlengemitteltes Molekulargewicht ermittelt nach DIN 55672-1 (März 2016), Teil 1, mit Gelpermeationschromatographie unter Verwendung von Polystyrolstandards und Tetrahydrofuran als Elutionsmittel von 200 bis 800 g/mol, bevorzugt von 200 bis 650 g/mol aufweist.

3. Verfahren nach Anspruch 2, **dadurch gekennzeichnet, dass** das difunktionelle Amin ein Polyetheramin ist, dessen Rückgrat aus Struktureinheiten aufgebaut ist, die sich von Ethylenoxid und/oder Propylenoxid ableiten und das zwei terminale Aminogruppen aufweist.

4. Verfahren nach Anspruch 3, **dadurch gekennzeichnet, dass** als Polyetheramin wenigstens eine Verbindung gemäß den folgenden Formeln (I) oder (II)

   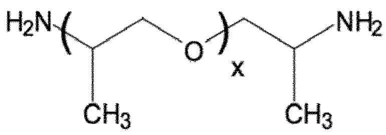

   Formel (I)

   mit
   x=5-10,

   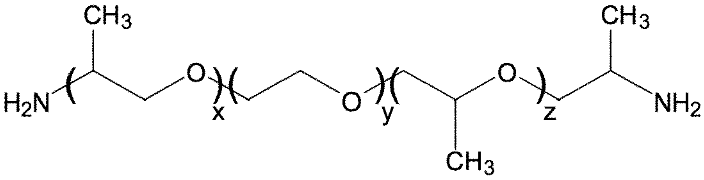

   Formel (II)

   mit
   x = 1 - 10 und y = 5 - 15 und z = 1 - 10
   eingesetzt werden.

5. Verfahren nach einem der vorstehenden Ansprüche, **dadurch gekennzeichnet, dass** das organische Harnstoffderivat der Komponente C erhältlich ist oder erhalten ist durch Umsetzung einer Zusammensetzung enthaltend

oder bestehend aus 65 bis 95 Gew.-Teilen, bevorzugt 75 bis 85 Gew.-Teilen, des difunktionellen Amins und 35 bis 5 Gew.-Teilen, bevorzugt 25 bis 15 Gew.-Teilen, Harnstoff, jeweils bezogen auf die gesamte Zusammensetzung.

**6.** Verfahren nach einem der vorstehenden Ansprüche, **dadurch gekennzeichnet, dass** das organische Harnstoffderivat der Komponente C eine Aminzahl nach DIN EN ISO 2114 (Juni 2002) von 0,2 bis 3,0 mg KOH/g, bevorzugt von 0,2 bis 2 mg KOH/g, aufweist.

**7.** Verfahren nach einem der vorstehenden Ansprüche, **dadurch gekennzeichnet, dass** das organische Harnstoffderivat der Komponente C eine dynamische Viskosität nach DIN 53019-1 (September 2008), gemessen mit einem Rheometer mit einem Messkegel mit einem Durchmesser von 50 mm, Winkel 1° bei einer Scherrate von 200 $s^{-1}$, von 2000 bis 40.000 mPa*s, bevorzugt von 2.500 bis 39.000 mPa*s, aufweist.

**8.** Verfahren nach einem der vorstehenden Ansprüche, **dadurch gekennzeichnet, dass** die Komponente B aromatische Di- oder Polyisocyanate enthält oder daraus besteht, vorzugsweise Toluol-2,4-diisocyanat und/oder Toluol-2,6-diisocyanat.

**9.** Verfahren einem der vorstehenden Ansprüche, **dadurch gekennzeichnet, dass** die Komponente A4 einen oder mehrere Katalysatoren ausgewählt aus der Gruppe bestehend aus Zinn-(II)-ethylhexanoat, Zinn-(II)-neodecanoat oder Zinn-(II)-ricinoleat oder Mischungen davon, bevorzugt Zinn-(II)-ethylhexanoat, enthält.

**10.** Polyurethan-Weichschaum, insbesondere hochelastischer HR-Polyurethanweichschaum, erhältlich nach einem Verfahren gemäß einem der Ansprüche 1 bis 9.

**11.** Polyurethan-Weichschaum nach Anspruch 10, **dadurch gekennzeichnet, dass** der Polyurethan-Weichschaum eine Rohdichte gemessen nach DIN EN ISO 845 (Oktober 2009) von 15 bis 50 $kg/m^3$, bevorzugt 25 bis 55 $kg/m^3$ aufweist.

**12.** Polyurethan-Weichschaum nach Anspruch 10 oder 11, **dadurch gekennzeichnet, dass** der Polyurethan-Weichschaum eine Stauchhärte gemäß DIN EN ISO 3386-1 (Oktober 2015), 40 %, 4. Stauchung, von 1,5 bis 5,5 kPa, bevorzugt von 2,5 bis 4,5 kPa, aufweist.

**13.** Polyurethan-Weichschaum nach einem der Ansprüche 10 bis 12, **dadurch gekennzeichnet, dass** der Polyurethan-Weichschaum einen Druckverformungsrest gemessen nach DIN ISO 1856 (September 2016) von nicht mehr als 5 % aufweist.

**14.** Verwendung eines Polyurethanschaumstoffs nach einem der Ansprüche 10 bis 13 zur Herstellung von Möbelpolsterungen, Textileinlagen, Matratzen, Automobilsitzen, Kopfstützen, Armlehnen, Sitzauflagen und Bauelementen.

**15.** Verwendung eines organischen Harnstoffderivats, insbesondere eines difunktionellen organischen Harnstoffderivats, das erhältlich ist oder erhalten ist durch Umsetzung von Harnstoff mit einem difunktionellen Amin, wobei das Amin ein zahlengemitteltes Molekulargewicht ermittelt nach DIN 55672-1 (März 2016), Teil 1, mit Gelpermeationschromatographie unter Verwendung von Polystyrolstandards und Tetrahydrofuran als Elutionsmittel von 200 bis 1000 g/mol aufweist, in einem Verfahren zur Herstellung von Polyurethan-Weichschaum, insbesondere hochelastischem HR-Polyurethanweichschaum, zur Reduzierung des Kaltfließverhaltens.

Europäisches Patentamt
European Patent Office
Office européen des brevets

# EUROPÄISCHER RECHERCHENBERICHT

Nummer der Anmeldung
EP 19 17 4539

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | US 2014/221518 A1 (EMMRICH-SMOLCZYK EVA [DE] ET AL) 7. August 2014 (2014-08-07)<br>* Tabellen 1-3 *<br>* Beispiel EM1 *<br>* Absatz [0011] - Absatz [0018] *<br>* Ansprüche 1-12 *<br>----- | 1-15 | INV.<br>C08G18/18<br>C08G18/20<br>C08G18/24<br>C08G18/32<br>C08G18/48<br>C08G18/63<br>C08G18/76<br>C08G18/50<br><br>ADD.<br>C08G101/00 |

| RECHERCHIERTE SACHGEBIETE (IPC) |
|---|
| C08G |

1

Der vorliegende Recherchenbericht wurde für alle Patentansprüche erstellt

| Recherchenort | Abschlußdatum der Recherche | Prüfer |
|---|---|---|
| München | 8. November 2019 | Sütterlin, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 19 17 4539

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2019

| Im Recherchenbericht angeführtes Patentdokument | Datum der Veröffentlichung | Mitglied(er) der Patentfamilie | Datum der Veröffentlichung |
|---|---|---|---|
| US 2014221518 A1 | 07-08-2014 | BR 102014002721 A2 | 02-12-2014 |
| | | CN 103965434 A | 06-08-2014 |
| | | DE 102013201825 A1 | 07-08-2014 |
| | | DK 2762509 T3 | 11-06-2019 |
| | | EP 2762509 A1 | 06-08-2014 |
| | | ES 2727951 T3 | 21-10-2019 |
| | | HU E043491 T2 | 28-08-2019 |
| | | PL 2762509 T3 | 30-09-2019 |
| | | TR 201907723 T4 | 21-06-2019 |
| | | US 2014221518 A1 | 07-08-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20140221518 A1
- US 20100069518 A
- EP 0303105 A


### In der Beschreibung aufgeführte Nicht-Patentliteratur


- Polyurethane, herausgegeben von Vieweg und Höchtlein. Kunststoff-Handbuch. Carl Hanser Verlag, 1966, vol. VII
- Neuauflage dieses Buches. Carl Hanser Verlag, 1993
- Kunststoff-Handbuch. Carl-Hanser-Verlag, 1993, vol. VII, 104-127
- Kunststoff-Handbuch. Carl-Hanser-Verlag, 1993, vol. VII, 139ff, , 197ff
- Kunststoff-Handbuch. Carl-Hanser-Verlag, 1993, vol. VII, 197 ff
- Kunststoff-Handbuch. Carl-Hanser-Verlag, 1993, vol. VII, 236 ff